# EUROPEAN PATENT SPECIFICATION

(11) **EP 2 198 555 B1**
(45) Date of publication and mention of the grant of the patent: **09.12.2015**
(21) Application number: 07817027.1
(22) Date of filing: 29.09.2007
(51) Int. Cl.: H04L 12/24

(54) **METHOD FOR DETERMING NETWORK PARAMETERS**
VERFAHREN ZUM BESTIMMEN VON NETZWERKPARAMETERN
PROCÉDÉ DE DÉTERMINATION DE PARAMÈTRES RÉSEAU

(43) Date of publication of application: 23.06.2010
(60) Divisional application: 11168902.2
(73) Proprietor: Huawei Technologies Co., Ltd., Longgang District Shenzhen, Guangdong 518129 (CN)
(72) Inventor: OLOFSSON, Henrik, 93015 Burea (SE)
(74) Representative: Kreuz, Georg Maria
(86) International application number: PCT/CN2007/070836
(87) International publication number: WO 2009/043215

(56) References cited:
- CN-A- 1 942 002
- GB-A- 2 406 473
- KR-A- 20050 047 002
- KR-A- 20070 063 616
- US-A1- 2007 206 552
- US-A1- 2007 211 726
- ERICSSON: "Automatic neighbour cell configuration", 3GPP DRAFT; R3-071494 AUTOMATIC NEIGHBOUR CELL CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Athens, Greece; 20070815, 15 August 2007 (2007-08-15), XP050162315, [retrieved on 2007-08-15]
- ERICSSON: "UE measurements and reporting of Global Cell Identity", 3GPP DRAFT; R2-072674, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Orlando, USA; 20070622, 22 June 2007 (2007-06-22), XP050135465, [retrieved on 2007-06-22]
- ERICSSON: "MCI conflict detection and resolution", 3GPP DRAFT; S5-071569 E MCI CONFLICT DETECTION AND RESOLUTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Roma; 20070822, 22 August 2007 (2007-08-22), XP050306211, [retrieved on 2007-08-22]

## Description

### Field of the Invention

The present invention relates to a method, and a network system for determining network parameters in a cellular communication system.

### Background of the Invention

Wireless mobile communication systems are usually cellular, i.e., the total coverage area of such systems is divided into smaller areas, cells, wherein each of these cells is associated with a radio base station having one or more antennas for providing communication resources via a radio interface for communication with user entities (UEs) in the radio coverage area of the radio base station.

In such systems, the base station often transmits an identity to enable the UE to identify the cell, so that the UE can report to the system which neighbour cell or cells it has detected.

The cells can be located adjacent to each other to jointly provide coverage in the geographical area that the communication system is intended to cover, and also, as in more complex systems, be arranged in different cell layers, wherein cells in different layers can be at least partially overlapping, and also be of different cell size.

In the 3rd Generation Partnership Program (3GPP) work on defining the cellular communication system presently called the Evolved Universal Terrestrial Radio Access (E-UTRA), or Long Term Evolution (LTE), it is suggested that each cell should be identified with one local identity (LI) (a.k.a. physical layer cell identity (PCI)), which is not unique within the system, i.e., the identity can be reused for more than one cell, and one global cell identity (GCI) which is unique in the system.

The use of both kinds of identities for a cell has the advantage that the LI can be made shorter, and thereby requires a smaller number of bits in a transmission than a global identity, for example when a UE is signaling the identity of a cell that has been detected by the UE. The GCI requires more bits in a transmission, but the use of the LI has the advantage that the GCI can be broadcasted more seldom, and also be used more seldom in reports from the UE.

As was mentioned, the UE is using the LI when reporting detected cells, but the system can also be using the LI when broadcasting which cells that should be barred (black listed and thereby not to be used by the UE) and if some cell specific parameters, for example a signal strength offset, should be applied to the measurements performed by the UE. Consequently, it is important that the LI uniquely identifies only one cell within the area where the UE is looking for neighbours.

There are situations when a base station of a serving cell must be able to translate a LI that a UE detects from a neighbour (or other) cell into a corresponding unique identity (GCI). For example, the base station needs to translate the LI into the corresponding GCI when initiating a communication with the base station of this neighbour cell, e.g., in order to initiate a handover process.

In 3GPP RAN 2 document R2-072674 (Ericsson) it is suggested that the translation is accomplished by letting each cell broadcast both LI and GCI (more seldom), and the base station requesting the UE to decode and report the GCI for a LI reported by the UE. This allows the base station to build up a representation, such as a list, of detected LI and its corresponding GCI for all neighbouring cells.

The usage of LI can be carefully planned so that no ambiguities arise with respect to which GCI a particular LI belongs. There are, however, situations where such planning is not always possible, for example in scenarios where a network operator is no longer in direct control of the location of the base station, e.g., personal home base stations, which are sold to an end-user with the purpose of creating one or more small cells in the home of the end-user.

In general, the same situation will occur if the operator chooses to not apply a strict planning process, but instead would like the system itself to be able to handle and adapt to situations where ambiguities regarding the GCI to which a particular LI belongs arise. In such situations, ambiguities regarding cell identities may arise, i.e., there may be two or more cells in the vicinity of each other having the same LI. Therefore, there exists a need for a way of handling situations when ambiguities in cell identities arise.

In the 3GPP document S5-071569 it is suggested that each base station should request the UE to report the GCI, also if the base station already has a mapping from this LI to a GCI. The reason for this is to detect potential collisions of the above kind, where cells located close to each other are using the same LI (but different GCI). This solution detects any cases where neighbours to one cell use the same LI.

This solution, however, has the drawback that it requires the base station to repeatedly request the UE to report the GCI to make sure that there is no collision. This reporting will consume valuable radio resources for the system, as well as battery power in the UE.

In the 3GPP document R3-071474 it is disclosed UE reports cell's MCI and CIPL.

Consequently, there exists a need for an improved method for detecting and managing cell parameters in general, and cell identities in particular, in a cellular communication system.

### Summary of the Invention

It is an object of the present invention to provide a method for determining cell parameters in a cellular communication system that solves or at least mitigates the above mentioned problems. This object is achieved by:
Method of determining network parameters in a cellular communication system, wherein a coverage area of said communication system is made up of a plurality of cells, each of said cells including at least a first network entity being a radio transmitter for providing communication with at least one user entity, when in the coverage area of a said cell, wherein said radio transmitter includes at least one local network parameter, which is reusable for radio transmitters within the communication system, and at least one global network parameter, which is unique to the radio transmitter in said system. The method is characterized by, from at least a first radio transmitter, being a radio base station, transmitting a local network parameter and corresponding global network parameter for at least one surrounding radio transmitter to a second network entity according to a representation, wherein the said radio transmitters within the communication system include the local network parameter and corresponding global network parameter for at least one surrounding radio transmitter according to the representation, and receiving and processing, by the second network entity, said local network parameter and corresponding global network parameter; wherein said second network entity is a radio transmitter providing coverage in a cell surrounding the transmitting radio transmitter.

It is a further object of the present invention to provide a network system that solves the above mentioned problems. This object is achieved by:
Network system of determining network parameters in a cellular communication system, wherein a coverage area of said communication system is made up of a plurality of cells, each of said cells including at least a first network entity being a radio transmitter for providing communication with at least one user entity, when in the coverage area of a said cell, wherein said radio transmitter includes at least one local network parameter, which is reusable for radio transmitters within the communication system, and at least one global network parameter, which is unique to the radio transmitter in the system. The network system is characterized in that the said network system comprises at least a first radio transmitter, being a radio base station, and a second network entity, wherein the first radio transmitter transmits of one or more local identities and global identities for adjacent one or more radio transmitters to to the second network entity according to a representation, wherein the said radio transmitters include the local network parameter and corresponding global network parameter for at least one radio transmitter surrounding the said radio transmitters according to the representation, and the second network entity receives and processes said local identities and global identities; wherein said second network entity is a radio transmitter providing coverage in a cell surrounding the transmitting radio transmitter.

According to the present invention, it is provided a method for determining network parameters in a cellular communication system. Cells in the system includes at least a first network entity being a radio transmitter for providing communication with at least one user entity, when in the coverage area of a said cell, and includes at least one local network parameter, which is reusable for radio transmitters within the communication system, and at least one global network parameter, which is unique to the radio transmitter. The method is characterized in the step of, from at least a first radio transmitter, transmitting a representation of a local network parameter and corresponding
global network parameter for at least one surrounding radio transmitter to a second network entity.

This has the advantage that ambiguities in the use of cell parameters, e.g., if two cells in the vicinity of each other are using the same local identity, can be solved by the said network entity collecting representations of local cell identities and corresponding global cell identities from radio transmitters so that the second network entity can then use the collected information to perform a thorough analysis of the situation, and, if required, change the local identity of one or more cells, e.g., if it is determined that two or more cells are being too closely located to have the same local identity. Different types of distances can be used in this evaluation, e.g. geographical distance or time difference of signals transmitted from the cells.

The second network entity can be a central node and the analysis consequently be performed in a centralized manner, so that all radio transmitters (e.g., base stations) within the communication system, or within a certain area, report to one single entity. Alternatively, the analysis can be performed in a distributed manner, where radio transmitters (base stations) exchange information with other radio transmitters (base stations) in order to verify the local identity in the area surrounding the radio transmitter. Further, a radio transmitter, or the central network entity, can request a radio transmitter to, in turn, request its surrounding radio transmitters to transmit the said representation. In this way data can be collected in a recursive manner.

The invention also relates to a communication system.

Further characteristics of the present invention, and advantages thereof, will be evident from the following detailed description of preferred embodiments and appended drawings, which are given by way of example only, and are not to be construed as limiting in any way.

### Brief Description of the Drawings

Fig. 1 discloses an example of a E-UTRA system in which the present invention may advantageously be utilised.
Fig. 2 discloses an exemplary method according to the invention.
Fig. 3 discloses an example of a simple relationship graph.
Fig. 4 discloses an example of an extended relationship graph.
Fig. 5 discloses another example of a relationship graph.
Fig. 6 discloses an exemplary illustration of a recursive way of collecting information.
Fig. 7 discloses an inter-frequency scenario.

### Detailed Description of the Invention

Although applicable in various kinds of cellular communication systems, the present invention will be described with reference to the 3rd Generation Partnership Program (3GPP) cellular communication system, which presently is called the Evolved Universal Terrestrial Radio Access (E-UTRA) or Long Term Evolution (LTE).

In the present description and claims, the term network entity is to be interpreted as a radio access node, such as a radio base station, or a backbone network node. Also smaller home base stations are to be included in the term network entity. Mobile user entities such as mobile phones, smartphones or handheld computers having communication capabilities, are not included in the term network entity as used in this description and the following claims.

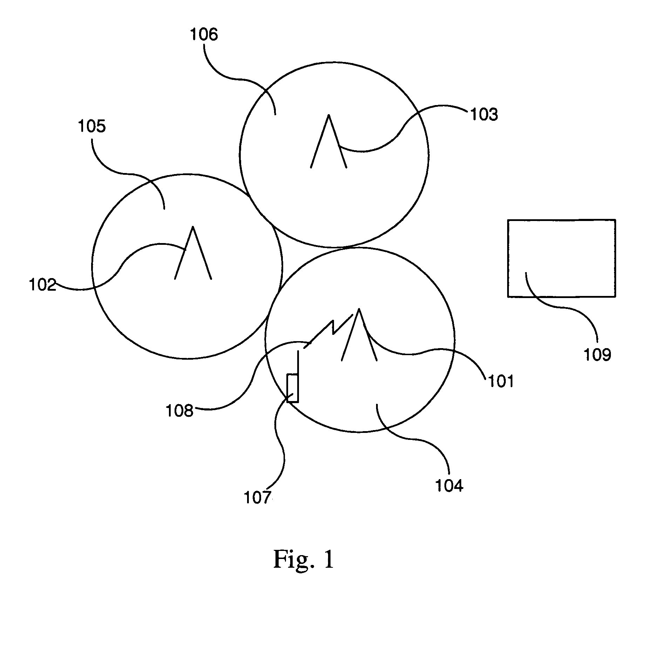

An example of a simplified architecture of an E-UTRA system 100 is shown in fig. 1, and discloses radio base stations 101-103 (stationary radio transceivers for duplex communication or, as the case may be, radio transmitters for downlink only mode communication. In the figure, the base stations are provided with radio transceivers). In E-UTRA the base stations are called eNBs (enhanced Node B) 101-103. A user entity (UE) 107 connects to the system by means of a radio interface, Uu interface, 108. The eNB 101-103 handles communication over the radio interface in a certain coverage area, i.e., cell 104-106, which is the area wherein the radio signal is strong enough to allow a satisfactory communication with UEs within the said area.

When the UE 107 moves around in the coverage area provided by the communication system, the UE 107 will move from one cell to another, and thereby an ongoing communication will be transferred (handed over) from the eNB to which the UE presently belongs, i.e., the source cell, cell 104 in fig. 1, to the cell into which the UE is entering, i.e., the target cell, e.g., cell 105 in fig. 1. This is accomplished by establishing a communication channel on the Uu interface of the target cell, and terminating the communication channel on the Uu interface of the source cell.

However, in order to perform such a handover, and also for other purposes, it must be possible to identify the cells, i.e., distinguish the cells from each other. As was mentioned in the background description above, this can be accomplished by the base stations 104-106 transmitting identities by means of which the base stations can be identified. The transmitted identities can be transmitted explicitly, or as signals from which the identities can be derived. In this description and claims, signals from which the identities can be derived are to be considered as if the identities are explicitly transmitted.

As was also mentioned above, the base stations can be provided with both a global cell identity GCI, which is unique within the system, and a local cell identity, LI, which can be reused for more than one base station within the system. Preferably, the cells are assigned local identities in a manner that ensures that two cells having the same LI are located at a sufficient distance from each other. However, since communication systems are becoming more and more complex, it is becoming more and more difficult to plan the usage of LI in a system in a manner so that no ambiguities arise with respect to which GCI a particular LI belongs. Also, there are situations where such planning is not always possible, for example with regard to personal home base stations as described above, and/or when the operator wants the system itself to be able to handle and adapt to situations where collisions in the use of LI arise, e.g., in SON (Self Organizing Networks) systems.

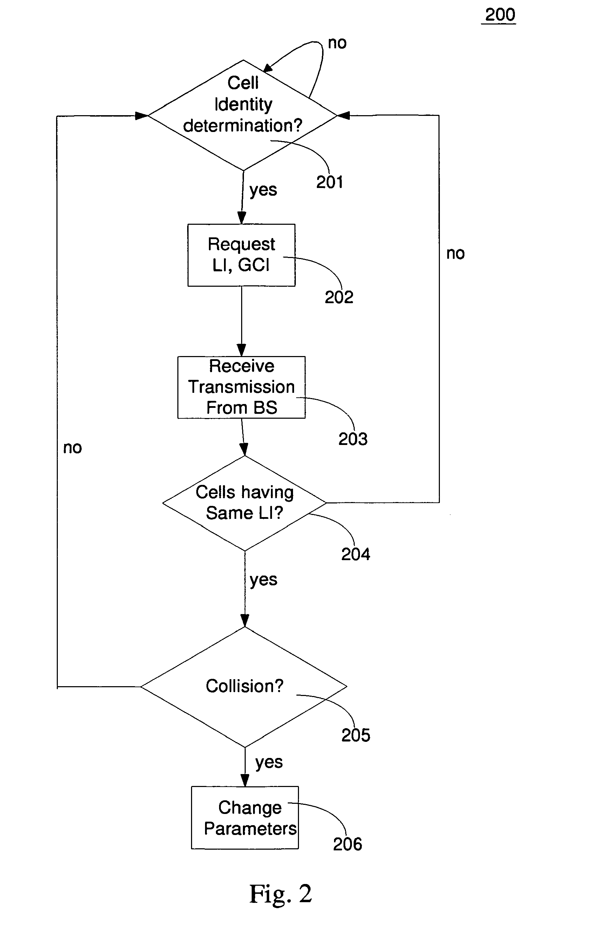

A method 200 according to a first exemplary embodiment of the present invention, which solves or at least mitigates the problem of such ambiguities, is disclosed in fig. 2. In the first exemplary embodiment, a central network entity, shown as 109 in fig. 1, is utilized to perform the necessary calculations to determine if two or more cells are using the same LI, and if one or more of those cells must change LI. The method starts in step 201, and when a cell identity determination is to be performed, the process continues to step 202. The cell identity determination can, for example, be performed with certain intervals, which can be set beforehand in the system. The length of the intervals between determinations can, for example, depend on time of day, weekday etc.

In step 202, the network entity 109 requests base stations in the system to transmit their lists of local identities LI and their corresponding global identities GCI to another network entity, e.g., the said network entity 109. All base stations in the system can be requested to transmit their lists, or, alternatively, only part of the base stations, e.g., base stations of a particular region of the communication system. Further, if a single base station handles more than one cell, lists for all cells that the base station handles can be transmitted.

A base station can, for example, create these lists from measurement data received from user entities when present in the coverage area of by the base station. Each time a new LI is reported to the base station that is not previously present in the list, the LI is added to the list, and the UE, either voluntarily or on request from the base station, transmits the GCI that corresponds to the LI. The base stations transmit their associated local identities and global identities so that the identities can be derived by a user entity from radio signals received from the said base stations, thereby enabling the communication of LI and GCI to a serving BS or other network entity according to the above.

When the network entity has received the requested lists, in step 203, the lists of detected GCI from each cell are combined into a data structure that enables a deeper analysis of the relationships, and a determination is performed in step 204 to determine whether there are any cell identity collisions present. This determination can, for example, be accomplished by the network entity 109 creating a representation of the locations of the various LI in the system, e.g., as a cell map. If it then is determined that two or more cells have the same LI, the process continues to step 205. Otherwise the process returns to step 201. In step 205 it is determined whether there is an actual collision, i.e., if the cells having a same LI are located too close to each other, so that there might be a risk that a UE in a position in between cells having the same LI can receive signals from both cells, which thereby can interfere with the ability of receiving data correctly. This determination can, for example, be based on the distance between the cells having the same LI. If the actual geographical locations of the cells (base stations) are known, the linear distance between the base stations can be compared with a threshold value, and if the distance is below the threshold value, a collision is detected. The threshold valuecan be arranged to take into account known geographical obstacles, such as tall buildings, mountains and the like, and also the transmitter power of the base stations. If a collision is detected, the process continues to step 206, otherwise it returns to step 201. In step 206 the collision is taken care of by changing the LI of one (or possibly more than one if more than two cells having the same LI are involved in the determination) of the cells.

Consequently, the present invention provides a solution that in a simple manner is capable of handling cell identity collisions.

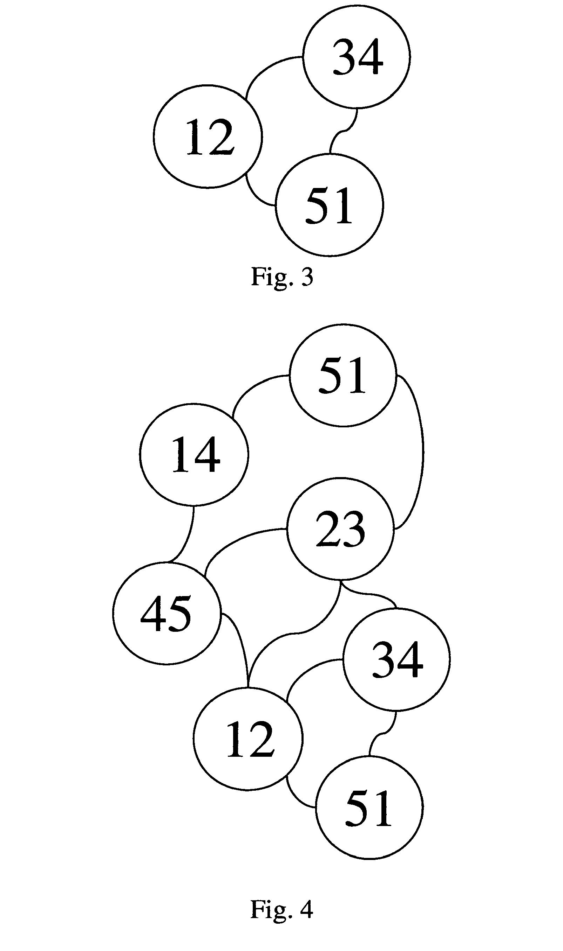

Instead of using the actual distance between two base stations in the determination of LI collisions, the analysis of distances between cells can be done in many ways. One way is to use a relationship graph. This is illustrated in fig. 3, where a relationship between two cells (circles) is illustrated with a line between the cells. As can be seen in the figure, PI=34 and PI=12 is used in the two neighbouring cells of the cell with PI=51.

In fig. 4, the example has been extended to include further cells, where PI=51 is re-used in another part of the network, where the cells having the same PI is not directly neighbouring each other. As can be seen in the figure, there are two or more cells between the two cells using PI=51 (depending on route in the figure).

If graphs of the disclosed kind are used, the distance between two cells having the same PI can be determined in terms of number of intermediate cells. In one example it is determined that if the shortest route includes two or less cells in between, as is exemplified in fig. 4 (51->23->34->51), a collision is determined to exist. Naturally the limit of number of cells in between can be set to any suitable number, and can also be arranged to depend on geography, whether it is an urban or country side area etc.

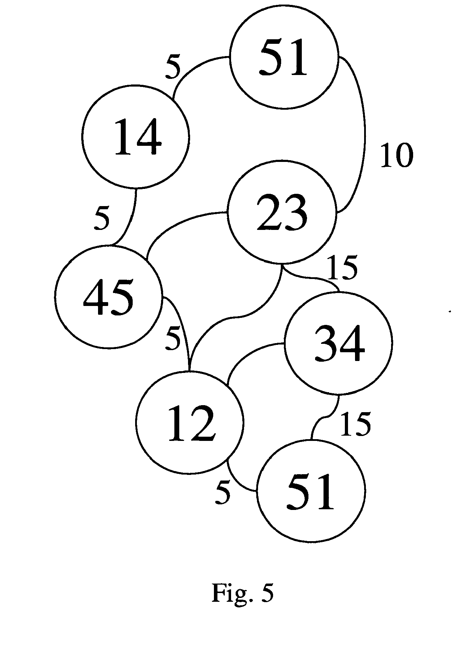

In another example, information about the cell size is used, and a distance is assigned to each relationship between the cells based on this cell size. This is exemplified in fig. 5, which shows the relationship graph of fig. 4, however also including distances between the cells. In the example, the distance between the two cells with PI 51 is 20 for the left hand route, including PI 14, 45, and 12, whereas the distance for the right-hand route, including PI 23 and 34 is 40. This illustrates that even though the left hand route is spanning over more cells, it is still shorter. In a solution according to fig. 5, a certain distance threshold value can be set, indicating that shorter distances is classified as a collision, while longer distances than the threshold value are not, irrespective of number of cells in between two cells having the same PI.

In order to facilitate the usage of a distance threshold value each base station, when being requested to transmit the PI/GCI list, may also provide a value indicating the cell radius or the geographic location of the cell or cells controlled by the base station.

In an alternative embodiment, the base stations can, for example, instead of transmitting the said lists upon request from a network entity, transmit their representations continuously, when a change has occurred, e.g. when a new identity has been added, at predetermined intervals or a combination of two or more of the above and/or on request by the network entity. The network entity can then perform the determination when an appropriate number of changed lists have been received.

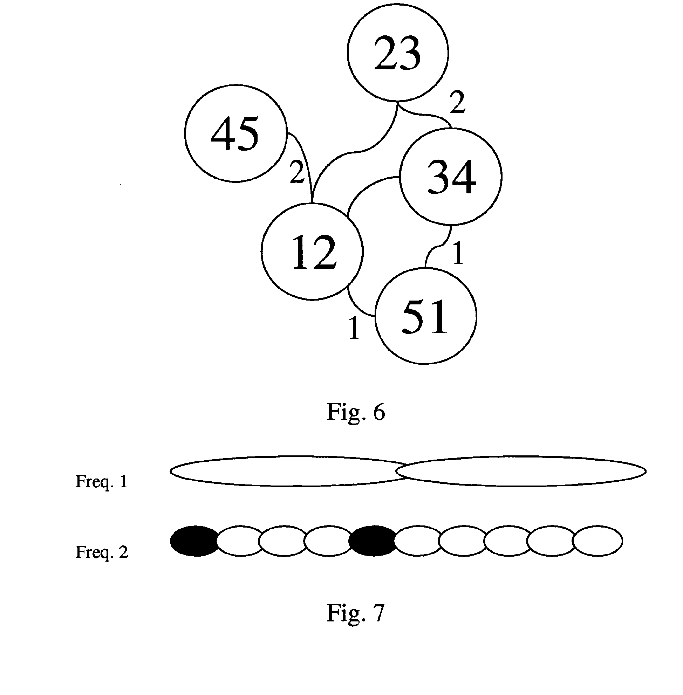

Further, the solutions described so far assumes that a central entity collects the information from all base stations. In another exemplary embodiment, each base station performs the evaluation by collecting the information from the neighbouring base stations. This can be done in a recursive manner wherein each base station request the list of PI/GCI from all cells mentioned in the own list of PI/GCI. The base station may then use the fetched lists to request information from the neighbour of the neighbour. This could continue in a recursive manner until the base station determines that it has enough information. This is illustrated in fig. 6, where the cell with PI 51 first collect information from cells with PI 12 and 34 and in a next step collects information from cell 45 and 23. Naturally, the recursive method can also be used by the central entity to collect information. A further alternative method of collecting the data is to request a base radio station to, in turn, request its surrounding base stations to transmit the said representation of a local network parameter and corresponding global network parameter to the requesting base station, whereafter the receiving base station transmits received representation(s) to the data collecting network entity.

Even further, the problem of cell identity collisions is even more severe in a multi frequency scenario, since the cells in different frequencies may be of different size. Even if the uniqueness of a LI is guaranteed among the immediate neighbours in one frequency, the UE may be handed over between different frequencies, where relatively smaller cells could cause potential ambiguities since a cell in one frequency may in size equal the size of a plurality of cells of the other frequency.

This is illustrated in fig. 7, where the two black cells using the same PI can be considered separated enough within frequency (layer) 2, but will be perceived as an ambiguity for UEs currently on Frequency 1 but measuring on Frequency 2. One solution to this problem is to extend the prior art solution to let the UE also periodically report GCI of cells on other frequencies, but this would dramatically increase the required transmission. According to the invention, however, a network entity can collect data according to the above from base stations in both (or more, if any) frequencies, and take situations such as in fig. 7 into consideration when determining whether or not there are any cell identity collisions, and take appropriate action on the basis of the determination. For example, even if it is not necessary to increase the minimum distance between cells having the same local identity in, e.g., frequency layer 2 of fig. 7, the distance can be increased anyway in order to avoid ambiguities in frequency layer 1. The network entity can be the central network entity as described above, or alternatively a surrounding base station according to the above.

Further, the above described invention can also be used for other cell specific network parameters than local cell identities, which are important to be unique. Examples of such network parameters include RACH signatures and UL reference signals. If the base stations stores a list of neighbouring global identities and the parameters used in the cell, the invention can be applied according to the above.

Although the present invention has been described in connection with an E-UTRAN system, the principles of the invention applies to cellular access systems in general, and are therefore applicable in any cellular system, as long as a local network parameter and a global network parameter is used by the cells.

## Claims

1. Method of determining network parameters in a cellular communication system, wherein a coverage area of said communication system is made up of a plurality of cells(104, 105 and 106), each of said cells including at least a first network entity being a radio transmitter(101, 102 and 103) for providing communication with at least one user entity(107), when in the coverage area of a said cell, wherein said radio transmitter includes at least one local network parameter, which is reusable for radio transmitters within the communication system, and at least one global network parameter, which is unique to the radio transmitter in said system,
from at least a first radio transmitter, being a radio base station, transmitting(203) a local network parameter and corresponding global network parameter for at least one surrounding radio transmitter to a second network entity according to a representation, wherein the said radio transmitters within the communication system include the local network parameter and corresponding global network parameter for at least one surrounding radio transmitter according to the representation, and
receiving(203) and processing(204,205 and 206), by the second network entity(109), said local network parameter and corresponding global network parameter;
wherein said second network entity is a radio transmitter providing coverage in a cell surrounding the transmitting radio transmitter.

2. Method according to claim 1, **characterized in that** the said radio transmitters include a representation of the local network parameter and global network parameter for a plurality of surrounding radio transmitters.

3. Method according to claim 1, **characterized in that** a plurality of radio transmitters transmit a representation of local network parameters and corresponding global network parameters for surrounding radio transmitters, respectively, to the second network entity.

4. Method according to claim 1, **characterized by** said second network entity:
requesting the said representation of a global network parameter corresponding to the said at least one local network parameter for at least one radio transmitter surrounding the said first radio transmitter.

5. Method according to claim 4, **characterized by** said second network entity requesting said representation of a global network parameter, wherein said global network parameter is a global network parameter of the said first radio transmitter.

6. Method according to claim 5, **characterized by** said second network entity requesting a local network parameter of the said first radio transmitter to which the global network parameter corresponds.

7. Method according to claim 1, **characterized by** said first network entity transmitting a representation comprising the local network parameter and corresponding global network parameter.

8. Method according to claim 1, wherein said first radio transmitter is an enhanced Node B in a Evolved UTRA system.

9. Method according to claim 1, **characterized in that** the said global network parameter is a global identity, which is unique to the radio transmitter, and that the said local network parameter is any of:
local identity, which is reusable for radio transmitters within the communication system;
random access channel signature; and
UL reference signal.

10. Method according to claim 1, **characterized in that** the second network entity collects global identity and local network parameter from one or more base stations on more than one frequency.

11. Method according to any of the claims 1-3, **characterized in that** said at least part of said surrounding radio transmitters are neighbour radio transmitters.

12. Network system of determining network parameters in a cellular communication system, wherein a coverage area of said communication system is made up of a plurality of cells(104, 105 and 106), each of said cells including at least a first network entity being a radio transmitter(101, 102 and 103) for providing communication with at least one user entity(107), when in the coverage area of a said cell, wherein said radio transmitter includes at least one local network parameter, which is reusable for radio transmitters within the communication system, and at least one global network parameter, which is unique to the radio transmitter in the system wherein the said network system comprises:
at least a first radio transmitter, being a radio base station, and a second network entity, wherein the first radio transmitter transmits(203) of one or more local identities and global identities for adjacent one or more radio transmitters to to the second network entity according to a representation, wherein the said radio transmitters include the local network parameter and corresponding global network parameter for at least one radio transmitter surrounding the said radio transmitters according to the representation, and
the second network entity(109) receives(203) and processes(204, 205 and 206) said local identities and global identities;
wherein said second network entity is a radio transmitter providing coverage in a cell surrounding the transmitting radio transmitter.

13. Network system according to claim 12, **characterized in that** the said global network parameter is a global identity, which is unique to the radio transmitter, and that the said local network parameter is any of:
local identity, which is reusable for radio transmitters within the communication system;
random access channel signature; and
UL reference signal.

## Patentansprüche

1. Verfahren zum Bestimmen der Netzparameter in einem Zellenkommunikationssystem, wobei ein Versorgungsbereich des Kommunikationssystems aus mehreren Zellen (104, 105 und 106) gebildet ist, wobei jede der Zellen wenigstens eine erste Netzentität enthält, die ein Funksender (101, 102 und 103) ist, um die Kommunikation mit wenigstens einer Anwenderentität (107) bereitzustellen, wenn sie sich in dem Versorgungsbereich der Zelle befindet, wobei der Funksender wenigstens einen lokalen Netzparameter, der für die Funksender innerhalb des Kommunikationssystems wiederverwendbar ist, und wenigstens einen globalen Netzparameter, der für den Funksender in dem System eindeutig ist, enthält; wobei das Verfahren Folgendes umfasst:
von wenigstens einem ersten Funksender, der eine Funkbasisstation ist, Senden (203) eines lokalen Netzparameters und eines entsprechenden globalen Netzparameters für wenigstens einen umgebenden Funksender in Übereinstimmung mit einer Darstellung an eine zweite Netzentität, wobei die Funksender innerhalb des Kommunikationssystems den lokalen Netzparameter und den entsprechenden globalen Netzparameter für wenigstens einen umgebenden Funksender in Übereinstimmung mit der Darstellung enthalten, und
Empfangen (203) und Verarbeiten (204, 205 und 206), durch die zweite Netzentität (109), des lokalen Netzparameters und des entsprechenden globalen Netzparameters;
wobei die zweite Netzentität ein Funksender ist, der eine Versorgung in einer Zelle bereitstellt, die den sendenden Funksender umgibt.

2. Verfahren nach Anspruch 1, **dadurch gekennzeichnet, dass** die Funksender eine Darstellung des lokalen Netzparameters und des globalen Netzparameters für mehrere umgebende Funksender enthalten.

3. Verfahren nach Anspruch 1, **dadurch gekennzeichnet, dass** mehrere Funksender eine Darstellung der lokalen Netzparameter und der entsprechenden globalen Netzparameter für die umgebenden Funksender jeweils an die zweite Netzentität senden.

4. Verfahren nach Anspruch 1, **dadurch gekennzeichnet, dass** die zweite Netzentität die Darstellung eines globalen Netzparameters, der dem wenigstens einen lokalen Netzparameter entspricht, für wenigstens einen Funksender, der den ersten Funksender umgibt, anfordert.

5. Verfahren nach Anspruch 4, **dadurch gekennzeichnet, dass** die zweite Netzentität die Darstellung eines globalen Netzparameters anfordert, wobei der globale Netzparameter ein globaler Netzparameter des ersten Funksenders ist.

6. Verfahren nach Anspruch 5, **dadurch gekennzeichnet, dass** die zweite Netzentität einen lokalen Netzparameter des ersten Funksenders anfordert, dem der globale Netzparameter entspricht.

7. Verfahren nach Anspruch 1, **dadurch gekennzeichnet, dass** die erste Netzentität eine Darstellung, die den lokalen Netzparameter und den entsprechenden globalen Netzparameter umfasst, sendet.

8. Verfahren nach Anspruch 1, wobei der erste Funksender ein verbesserter Knoten B in einem entwickelten UTRA-System ist.

9. Verfahren nach Anspruch 1, **dadurch gekennzeichnet, dass** der globale Netzparameter eine globale Identität ist, die für den Funksender eindeutig ist, wobei der lokale Netzparameter irgendeines der Folgenden ist:
eine lokale Identität, die für die Funksender innerhalb des Kommunikationssystems wiederverwendbar ist;
eine Direktzugriffs-Kanalsignatur; und
ein UL-Bezugssignal.

10. Verfahren nach Anspruch 1, **dadurch gekennzeichnet, dass** die zweite Netzentität die globale Identität und den lokalen Netzparameter von einer oder mehreren Basisstationen auf mehr als einer Frequenz sammelt.

11. Verfahren nach einem der Ansprüche 1-3, **dadurch gekennzeichnet, dass** wenigstens der Teil der umgebenden Funksender aus Nachbarfunksendern besteht.

12. Netzsystem zum Bestimmen der Netzparameter in einem Zellenkommunikationssystem, wobei ein Versorgungsbereich des Kommunikationssystems aus mehreren Zellen (104, 105 und 106) gebildet ist, wobei jede der Zellen wenigstens eine erste Netzentität enthält, die ein Funksender (101, 102 und 103) ist, um die Kommunikation mit wenigstens einer Anwenderentität (107) bereitzustellen, wenn sie sich in dem Versorgungsbereich der Zelle befindet, wobei der Funksender wenigstens einen lokalen Netzparameter, der für die Funksender innerhalb des Kommunikationssystems wiederverwendbar ist, und wenigstens einen globalen Netzparameter, der für den Funksender in dem System eindeutig ist, enthält; wobei das Netzsystem Folgendes umfasst:
wenigstens einen ersten Funksender, der eine Funkbasisstation ist, und eine zweite Netzentität, wobei der erste Funksender (203) eine oder mehrere lokale Identitäten und globale Identitäten für einen oder mehrere benachbarte Funksender an die zweite Netzentität sendet, in Übereinstimmung mit einer Darstellung, wobei die Funksender den lokalen Netzparameter und den entsprechenden globalen Netzparameter für wenigstens einen Funksender, der die Funksender umgibt, in Übereinstimmung mit der Darstellung enthalten, und
die zweite Netzentität (109) empfängt (203) und verarbeitet (204, 205 und 206) die lokalen Netzparameter und die entsprechenden globalen Netzparameter;
wobei die zweite Netzentität ein Funksender ist, der eine Versorgung in einer Zelle bereitstellt, die den sendenden Funksender umgibt.

13. Netzsystem nach Anspruch 12, **dadurch gekennzeichnet, dass** der globale Netzparameter eine globale Identität ist, die für den Funksender eindeutig ist, wobei der lokale Netzparameter irgendeines der Folgenden ist:
eine lokale Identität, die für die Funksender innerhalb des Kommunikationssystems wiederverwendbar ist;
eine Direktzugriffs-Kanalsignatur; und
ein UL-Bezugssignal.

## Revendications

1. Procédé de détermination de paramètres de réseau dans un système de communications cellulaires, dans lequel une zone de couverture dudit système de communications est composée d'une pluralité de cellules (104, 105 et 106), chacune desdites cellules comportant au moins une première entité de réseau qui est un émetteur radio (101, 102 et 103) pour assurer des communications avec au moins une entité d'utilisateur (107), quand elle se trouve dans la zone de couverture d'une dite cellule, dans lequel ledit émetteur radio comporte au moins un paramètre de réseau local, lequel est réutilisable pour les émetteurs radio dans le système de communications, et au moins un paramètre de réseau global, lequel est unique pour l'émetteur radio dans ledit système ; le procédé comprenant :
depuis au moins un premier émetteur radio, qui est une station de base radio, la transmission (203) d'un paramètre de réseau local et d'un paramètre de réseau global correspondant d'au moins un émetteur radio avoisinant à une seconde entité de réseau en fonction d'une représentation, lesdits émetteurs radio dans le système de communications comportant le paramètre de réseau local et le paramètre de réseau global correspondant d'au moins un émetteur radio avoisinant en fonction de la représentation, et
la réception (203) et le traitement (204, 205 et 206), par la seconde entité de réseau (109), dudit paramètre de réseau local et du paramètre de réseau global correspondant ;
ladite seconde entité de réseau étant un émetteur radio qui fournit une couverture dans une cellule avoisinant l'émetteur radio transmettant.

2. Procédé selon la revendication 1, **caractérisé en ce que** lesdits émetteurs radio comportent une représentation du paramètre de réseau local et du paramètre de réseau global d'une pluralité d'émetteurs radio avoisinants.

3. Procédé selon la revendication 1, **caractérisé en ce que** une pluralité d'émetteurs radio transmet une représentation de paramètres de réseau locaux et de paramètres de réseau globaux correspondants d'émetteurs radio avoisinants, respectivement, à la seconde entité de réseau.

4. Procédé selon la revendication 1, **caractérisé en ce que** ladite seconde entité de réseau requiert ladite représentation d'un paramètre de réseau global correspondant audit au moins un paramètre de réseau local d'au moins un émetteur radio entourant ledit premier émetteur radio.

5. Procédé selon la revendication 4, **caractérisé en ce que** ladite seconde entité de réseau requiert ladite représentation d'un paramètre de réseau global, ledit paramètre de réseau global étant un paramètre de réseau global dudit premier émetteur radio.

6. Procédé selon la revendication 5, **caractérisé en ce que** ladite seconde entité de réseau requiert un paramètre de réseau local dudit premier émetteur radio auquel correspond le paramètre de réseau global.

7. Procédé selon la revendication 1, **caractérisé en ce que** ladite première entité de réseau transmet une représentation comprenant le paramètre de réseau local et le paramètre de réseau global correspondant.

8. Procédé selon la revendication 1, dans lequel ledit premier émetteur radio est un Noeud B rehaussé dans un système UTRA Evolué.

9. Procédé selon la revendication 1, **caractérisé en ce que** ledit paramètre de réseau global est une identité globale, unique à l'émetteur radio, et ledit paramètre de réseau local est l'un quelconque des paramètres suivants :
une identité locale, réutilisable pour les émetteurs radio dans le système de communications ;
une signature de canal d'accès aléatoire ; et
un signal de référence UL.

10. Procédé selon la revendication 1, **caractérisé en ce que** la seconde entité de réseau collecte une identité globale et un paramètre de réseau local auprès d'une ou de plusieurs stations de base sur plus d'une fréquence.

11. Procédé selon l'une quelconque des revendications 1 à 3, **caractérisé en ce que** ladite au moins une partie desdits émetteurs radio avoisinants est constituée par des émetteurs radio voisins.

12. Système réseau de détermination de paramètres de réseau dans un système de communications cellulaires, dans lequel une zone de couverture dudit système de communications est composée d'une pluralité de cellules (104, 105 et 106), chacune desdites cellules comportant au moins une première entité de réseau qui est un émetteur radio (101, 102 et 103) pour assurer des communications avec au moins une entité d'utilisateur (107), quand elle se trouve dans la zone de couverture d'une dite cellule, dans lequel ledit émetteur radio comporte au moins un paramètre de réseau local, lequel est réutilisable pour les émetteurs radio dans le système de communications, et au moins un paramètre de réseau global, lequel est unique à l'émetteur radio dans le système, ledit système réseau comprenant :
au moins un premier émetteur radio, qui est une station de base radio, et une seconde entité de réseau, le premier émetteur radio transmettant (203) une ou plusieurs identités locales et identités globales d'un ou de plusieurs émetteurs radio adjacents à la seconde entité de réseau en fonction d'une représentation, lesdits émetteurs radio comportant le paramètre de réseau local et le paramètre de réseau global correspondant pour au moins un émetteur radio avoisinant lesdits émetteurs radio en fonction de la représentation, et
la seconde entité de réseau (109) recevant (203) et traitant (204, 205 et 206) lesdites identités locales et identités globales ;
ladite seconde entité de réseau étant un émetteur radio qui fournit une couverture dans une cellule avoisinant l'émetteur radio transmettant.

13. Système réseau selon la revendication 12, **caractérisé en ce que** ledit paramètre de réseau global est une identité globale, laquelle est unique à l'émetteur radio, et ledit paramètre de réseau local est l'un quelconque des paramètres suivants :
une identité locale, réutilisable pour les émetteurs radio dans le système de communications ;
une signature de canal d'accès aléatoire ; et
un signal de référence UL.
